# EUROPEAN PATENT APPLICATION

(11) **EP 4 836 007 A1**
(43) Date of publication of application: **04.11.2026**
(21) Application number: 25880409.5
(22) Date of filing: 17.10.2025
(51) Int. Cl.: H01M 4/525, H01M 4/505, H01M 10/0525, H01M 4/02

(54) **POSITIVE ELECTRODE ACTIVE MATERIAL AND LITHIUM SECONDARY BATTERY COMPRISING SAME**

(30) Priority: 18.10.2024 KR 20240143169
(71) Applicant: EcoPro BM Co., Ltd, Cheongju-si, Chungcheongbuk-do 28116 (KR)
(72) Inventor: SON, Yu Jin, Cheongju-si, Chungcheongbuk-do 28116 (KR); HEO, Jun Hee, Cheongju-si, Chungcheongbuk-do 28116 (KR); LEE, Sang Don, Cheongju-si, Chungcheongbuk-do 28116 (KR); PARK, Jung Bae, Cheongju-si, Chungcheongbuk-do 28116 (KR); SHIN, Yo Seop, Cheongju-si, Chungcheongbuk-do 28116 (KR); HWANG, Do Young, Cheongju-si, Chungcheongbuk-do 28116 (KR); KIM, Seok Jo, Cheongju-si, Chungcheongbuk-do 28116 (KR); CHOI, Woo Seok, Cheongju-si, Chungcheongbuk-do 28116 (KR); PARK, Jung Gyu, Cheongju-si, Chungcheongbuk-do 28116 (KR)
(74) Representative: Vossius & Partner Patentanwälte Rechtsanwälte mbB
(86) International application number: PCT/KR2025/016513
(87) International publication number: WO 2026/084527

(57) **Abstract**

The present invention relates to a positive electrode active material and a lithium secondary battery comprising the same. More particularly, the present invention relates to a positive electrode active material including a Mid-Ni type lithium transition metal oxide in which a content of nickel (Ni) is 50 mol% or more and 70 mol% or less, and relates to a positive electrode active material capable of securing excellent particle strength and structural stability even in a polycrystalline structure by suppressing the growth of crystallites in the lithium transition metal oxide and stabilizing grain boundaries, and a lithium secondary battery including the same.

## Description

### BACKGROUND

### 1. Field of the Invention

The present invention relates to a positive electrode active material and a lithium secondary battery comprising the same. More particularly, the present invention relates to a positive electrode active material including a Mid-Ni type lithium transition metal oxide in which a content of nickel (Ni) is 50 mol% or more and 70 mol% or less, and a positive electrode active material capable of securing excellent particle strength and structural stability even in a polycrystalline structure by suppressing the growth of crystallites in the lithium transition metal oxide and stabilizing grain boundaries, and a lithium secondary battery including the same.

### 2. Discussion of Related Art

Lithium secondary batteries are establishing themselves as core power supply sources in various application fields such as portable electronic devices, electric vehicles, and energy storage devices due to their high energy density and excellent output characteristics. In particular, a positive electrode active material is one of the most important components determining the electrochemical performance of a lithium secondary battery, and the structural stability, charge/discharge characteristics, cycle life, and safety thereof all depend on the composition and microstructure of the positive electrode active material.

As a representative positive electrode active material, a lithium transition metal oxide including nickel (Ni), cobalt (Co), and manganese (Mn), that is, an NCM-based series, is widely researched and commercialized. The NCM-based positive electrode active material may be classified into High-Ni (nickel content > 70%), Mid-Ni (nickel content 50 to 70%), and Low-Ni (nickel content ≤ 40%) according to a composition ratio, and each composition has inherent advantages and disadvantages.

The High-Ni composition has an advantage of being capable of securing high capacity and energy density, but has a problem in that thermal stability and cycling performance are degraded due to structural instability, oxygen release, Li/Ni mixing (cation mixing), and the like. On the other hand, the Low-Ni composition has excellent structural stability, but has limitations in high-energy applications because its theoretical capacity is low. Accordingly, the Mid-Ni composition in which a content of nickel (Ni) falls within a range of 50 to 70 mol% is receiving attention as a balanced composition capable of securing relatively high capacity and stability at the same time.

The Mid-Ni type positive electrode active material generally exhibits good charge/discharge efficiency and cycle characteristics in a lithium secondary battery, and thus is suitable for applications in which high capacity and stability are required at the same time. However, even in such a Mid-Ni type positive electrode active material, improvement of the particle structure and microstructural characteristics still remains as an important task.

Among the microstructures of the positive electrode active material, the size of a primary particle is an important factor. In general, as the size of a primary particle decreases, a lithium diffusion path becomes shorter during charging/discharging, so rate capability may be improved. However, when the size of a primary particle is less than 1 µm, the possibility of side reactions with an electrolyte may increase due to an excessively wide specific surface area, and mechanical stress is concentrated inside the particles due to repeated lattice contraction and expansion repeatedly occurring during charging/discharging. As a result, a problem in which the particle fracture strength is reduced may appear. Such mechanical brittleness appears more prominently in a Mid-Ni type positive electrode active material having a polycrystalline structure, and consequently leads to fracture or cracking of secondary particles, thereby degrading the cycling performance of a battery.

As such, there is a need for a technology capable of effectively securing particle strength and suppressing cracking in a Mid-Ni type positive electrode active material having a polycrystalline structure in which the size of a primary particle is less than 1 µm.

### SUMMARY OF THE INVENTION

A so-called Mid-Ni type lithium transition metal oxide in which a content of nickel (Ni) is 50 mol% or more and 70 mol% or less has advantages of excellent structural stability compared to a High-Ni composition in which the content of nickel (Ni) is greater than 70 mol%, and a higher energy density than a Low-Ni type lithium transition metal oxide.

However, the Mid-Ni type lithium transition metal oxide has a problem in that mechanical strength is not sufficiently secured in a polycrystalline structure (for example, when the average particle diameter of primary particles is less than 1 µm). In general, as the size of a primary particle decreases, electrochemical reactivity is improved, but the particle fracture strength is reduced by volume changes and lattice deformation during charging/discharging, and consequently, fracture or cracking of secondary particles may be caused and may lead to degradation of cycling performance.

Meanwhile, improving particle strength through single crystallization may be considered. As the size of a primary particle constituting the lithium transition metal oxide increases and, along with this, the number of primary particles constituting the lithium transition metal oxide decreases, intergranular cracks may be reduced. However, this makes the particles more vulnerable to intragranular cracks, and as the size of a primary particle increases, a problem in which kinetic characteristics are degraded due to an intraparticle lithium ion diffusion path becoming longer may occur.

Therefore, it is important to secure the particle fracture strength of a Mid-Ni type lithium transition metal oxide having a polycrystalline structure in which the average particle diameter of primary particles is less than 1 µm, thereby improving mechanical reliability.

Under such a technical background, an object of the present invention is to provide a positive electrode active material including a Mid-Ni type lithium transition metal oxide having a polycrystalline structure, which suppresses the degradation of cycling performance of a lithium secondary battery by enhancing the particle strength and crystallinity of the lithium transition metal oxide.

In addition, another object of the present invention is to provide a lithium secondary battery using the positive electrode active material defined in the present application.

The objects of the present invention are not limited to the objects mentioned above, and other objects and advantages of the present invention not mentioned can be understood by the following description and will be more clearly understood by embodiments of the present invention. In addition, it will be readily understood that the objects and advantages of the present invention may be realized by the means and combinations thereof indicated in the claims.

The present invention for solving the above-described technical problem includes the following inventions.
[1] A positive electrode active material including a lithium transition metal oxide in which the content of nickel (Ni) among all metal elements excluding lithium is 50 mol% or more and 70 mol% or less, wherein the content of manganese (Mn) in the lithium transition metal oxide is greater than the content of cobalt (Co), the lithium transition metal oxide has the form of a secondary particle in which a plurality of primary particles having an average particle diameter of less than 1 µm are aggregated, and the compressive fracture strength of the positive electrode active material is 12.2 kgf/mm² or more and 20.0 kgf/mm² or less.
[2] The positive electrode active material according to [1], wherein the lithium transition metal oxide has the form of a secondary particle in which a plurality of primary particles having an average particle diameter of 0.02 µm to 0.8 µm are aggregated.
[3] The positive electrode active material according to [1] or [2], wherein the lithium transition metal oxide has the form of a secondary particle having an average particle diameter of 3 µm to 20 µm.
[4] The positive electrode active material according to any one of [1] to [3], wherein the average crystallite size of the lithium transition metal oxide calculated by Rietveld refinement of the diffraction spectrum obtained through X-ray diffraction analysis of the positive electrode active material using Cu-Kα radiation is 110 nm or more and less than 148 nm.
[5] The positive electrode active material according to any one of [1] to [4], wherein the lithium transition metal oxide has a content of cobalt (Co) of less than 20 mol% among all metal elements excluding lithium.
[6] The positive electrode active material according to any one of [1] to [5], wherein the lithium transition metal oxide has a content of manganese (Mn) of 20 mol% or more and less than 50 mol% among all metal elements excluding lithium.
[7] The positive electrode active material according to any one of [1] to [6], wherein a particle breakage ratio calculated by Equation 1 by measuring a change in the average particle diameter of the secondary particles before/after 4.5-ton pressing of the positive electrode active material is 0.20 or less. [Equation 1] $Particle breakage ratio = \left({D}_{50}{before}_{pressing}-{D}_{50}{after}_{pressing}\right) / {D}_{50} {before}_{pressing}$
[8] The positive electrode active material according to any one of [1] to [7], wherein at least one dopant is doped into a crystal lattice of the lithium transition metal oxide.
[9] The positive electrode active material according to [8], wherein the dopant is at least one selected from W, Y and Zr.
[10] The positive electrode active material according to any one of [1] to [7], wherein the lithium transition metal oxide has an average composition represented by Chemical Formula 1 below:

   [Chemical Formula 1] LiₐNi_{1-(b+c+d)}Co_{b}Mn_{c}M1_{d}O₂

   In Chemical Formula 1,
   M1 is at least one selected from Na, K, Mg, Ba, B, Ca, Ce, Hf, Ta, Cr, F, Al, V, Ti, Fe, Zr, Zn, Si, Y, Nb, Ga, Sn, W, Mo, P, Sr, Ge, Nd, Gd and Cu, and
   0.95≤a≤1.15, 0≤b<0.20, 0.20≤c<0.50, 0<d≤0.10, and 0.50≤1-(b+c+d)≤0.70.
   In addition, the present invention includes other aspects as follows.
[11] A positive electrode including the positive electrode active material of any one of [1] to [10].
[12] A lithium secondary battery using the positive electrode of [11].

The positive electrode active material according to the present invention can improve the structural stability of particles through doping with a specific dopant and improve particle fracture strength by enhancing crystallinity, despite including a Mid-Ni type lithium transition metal oxide having a polycrystalline structure in which the average size of primary particles is less than 1 µm. Accordingly, the problem of reduced mechanical strength, which has been recognized as a drawback of conventional Mid-Ni type lithium transition metal oxides, can be effectively addressed.

By improving the particle fracture strength of the lithium transition metal oxide constituting the positive electrode active material, fracture or cracking of secondary particles can be suppressed, thereby improving the stability of the electrode structure during charging/discharging of a lithium secondary battery. Accordingly, the lithium secondary battery can exhibit improved cycling performance and maintain an excellent capacity retention rate even under repeated charging/discharging conditions.

In addition to the above-described effects, specific effects of the present invention will be described together while describing specific matters for carrying out the invention below.

### BRIEF DESCRIPTION OF THE DRAWINGS

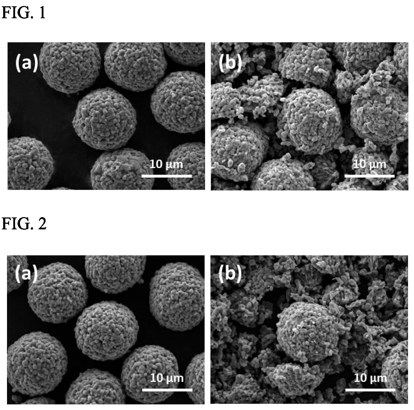

FIG. 1 is an SEM image confirming particle breakage before (a) and after (b) 4.5-ton pressing of a positive electrode active material of PAM4 using the method described in Experimental Example 1.
FIG. 2 is an SEM image confirming particle breakage before (a) and after (b) 4.5-ton pressing of a positive electrode active material of PAM1 using the method described in Experimental Example 1.

### DETAILED DESCRIPTION OF EXEMPLARY EMBODIMENTS

In order to more easily understand the present invention, specific terms are defined herein for convenience. Unless otherwise defined herein, scientific terms and technical terms used in the present invention will have meanings generally understood by a person having ordinary skill in the art. In addition, unless specifically specified in the context, terms in a singular form should be understood to include their plural form, and terms in a plural form should be understood to include their singular form.

### Positive electrode active material

Herein, a positive electrode active material includes a lithium transition metal oxide capable of reversible intercalation/deintercalation of lithium ions. Here, the lithium transition metal oxide means an oxide in which lithium and metal elements are combined.

The lithium transition metal oxide is a composite metal oxide capable of intercalation/deintercalation of lithium ions, and has a layered crystal structure belonging to an R-3m space group. The lithium transition metal oxide having a layered crystal structure exhibits a specific peak in a region in which 20 is 18° to 20° (e.g., 2θ=18.6±1° region) among diffraction patterns obtained from XRD analysis.

The lithium transition metal oxide includes at least lithium and a transition metal. The transition metal may include at least one, at least two, or all selected from nickel (Ni), cobalt (Co), and manganese (Mn).

Preferably, the lithium transition metal oxide may be a lithium nickel-based composite oxide including nickel (Ni). In addition, the lithium transition metal oxide may be a lithium nickel-based composite oxide including nickel (Ni) and cobalt (Co).

In order to improve low rate capability and cycling performance while maintaining the high reversible capacity of LiNiO₂, the lithium nickel-based composite oxide may be a ternary type such as the so-called NCM (Ni-Co-Mn) or NCA (Ni-Co-Al), or a quaternary type lithium transition metal oxide such as NCMA (Ni-Co-Mn-Al), in which a portion of nickel (Ni) is substituted with cobalt (Co), manganese (Mn), or aluminum (Al). The ternary or quaternary type lithium transition metal oxide may further contain a dopant other than nickel (Ni), cobalt (Co), manganese (Mn), and aluminum (Al).

The lithium transition metal oxide defined in the present application is a Mid-Ni type lithium transition metal oxide having a relatively low content of nickel (Ni). In the present application, a lithium transition metal oxide in which a content of nickel (Ni) among the transition metals is 70 mol% or less is referred to as a Mid-Ni type lithium transition metal oxide, and a lithium transition metal oxide in which a content of nickel (Ni) among the transition metals is greater than 70 mol% (for example, 75 mol% or more or 80 mol% or more) is defined as a High-Ni type lithium transition metal oxide.

The lithium transition metal oxide may have an average composition represented by Chemical Formula 1 below. The average composition of the lithium transition metal oxide may be measured according to a known ICP analysis method using an inductively coupled plasma spectrometer (ICP).

[Chemical Formula 1] LiₐNi_{1-(b+c+d)}Co_{b}Mn_{c}M1_{d}O₂

In Chemical Formula 1,
M1 is at least one selected from Na, K, Mg, Ba, B, Ca, Ce, Hf, Ta, Cr, F, Al, V, Ti, Fe, Zr, Zn, Si, Y, Nb, Ga, Sn, W, Mo, P, Sr, Ge, Nd, Gd and Cu, and
0.95≤a≤1.15, 0≤b<0.20, 0.20≤c<0.50, 0<d≤0.10, and 0.50≤1-(b+c+d) ≤0.70.

In the lithium transition metal oxide, a, which represents the ratio (Li/Ni+Co+Mn+Ml) of lithium to all elements other than lithium may be 0.95 or more, 0.96 or more, 0.97 or more, 0.98 or more, 0.99 or more, 1.00 or more, 1.01 or more, 1.02 or more, 1.03 or more, 1.04 or more, or 1.05 or more. In addition, a may be 1.15 or less, 1.14 or less, 1.13 or less, 1.12 or less, 1.11 or less, 1.10 or less, 1.09 or less, 1.08 or less, 1.07 or less, 1.06 or less, or 1.05 or less. The upper and lower limits of the molar fraction of lithium (Li) to all elements other than lithium (Li) in the lithium transition metal oxide may be appropriately selected within the above-described range. When the molar fraction of lithium (Li) in the lithium transition metal oxide satisfies the above range, a stable crystal structure may be formed.

When a in Chemical Formula 1 is less than 0.95, the capacity of the positive electrode active material including the lithium transition metal oxide represented by Chemical Formula 1 may be reduced. On the other hand, when a in Chemical Formula 1 is greater than 1.15, phase separation may occur due to lithium and manganese present in an excessive amount in the lithium transition metal oxide, and an impurity phase belonging to a space group other than the R-3m space group may occur.

In Chemical Formula 1, 1-(b+c+d), which represents the ratio (Ni/Ni+Co+Mn+M1) of nickel (Ni) to all metal elements other than lithium in the lithium transition metal oxide, may be 0.50 or more, 0.51 or more, 0.52 or more, 0.53 or more, 0.54 or more, 0.55 or more, 0.56 or more, 0.57 or more, 0.58 or more, 0.59 or more, or 0.60 or more. In addition, 1-(b+c+d) may be 0.70 or less, 0.69 or less, 0.68 or less, 0.67 or less, 0.66 or less, or 0.65 or less. The upper and lower limits of the molar fraction of nickel (Ni) to all elements other than lithium in the lithium transition metal oxide may be appropriately selected within the above-described range. When the molar fraction of nickel (Ni) in the lithium transition metal oxide satisfies the above range, a stable Mid-Ni-type crystal structure may be formed.

When the content of nickel (Ni) in the lithium transition metal oxide exceeds 70 mol%, lithium-nickel mixing (Li/Ni cation mixing) in a crystal structure increases, which lowers the stability of a layered structure, and a tendency of structural deformation (strain) and oxygen release intensifies during charging/discharging, so crystal lattice stress may increase. These factors may cause particle cracking and grain boundary weakening, thereby lowering the mechanical strength of the particles.

On the other hand, when the content of nickel (Ni) in the lithium transition metal oxide is less than 50 mol%, phase separation may occur due to an excessive amount of transition metals other than nickel (Ni) (for example, manganese). As a result, an impurity phase such as a spinel phase or a rock-salt phase not belonging to the R-3m space group may be formed. Such an impurity phase may induce degradation of electrochemical characteristics, and may be directly connected to performance deterioration such as capacity reduction and output degradation.

Therefore, the lithium transition metal oxide according to the present invention may improve particle strength and electrochemical characteristics while securing the balance between structural stability and energy density by having a Mid-Ni composition of 50 mol% or more and 70 mol% or less.

In Chemical Formula 1, b, which represents the ratio (Co/Ni+Co+Mn+Ml) of cobalt to all metal elements other than lithium in the lithium transition metal oxide, may be 0 or more, 0.01 or more, 0.02 or more, 0.03 or more, 0.04 or more, or 0.05 or more. In addition, b may be less than 0.20, 0.19 or less, 0.18 or less, 0.17 or less, 0.16 or less, 0.15 or less, less than 0.15, 0.14 or less, 0.13 or less, 0.12 or less, 0.11 or less, 0.10 or less, 0.09 or less, 0.08 or less, 0.07 or less, 0.06 or less, or 0.05 or less. The upper and lower limits of the molar fraction of cobalt (Co) to all elements other than lithium in the lithium transition metal oxide may be appropriately selected within the above-described range. When the molar fraction of cobalt (Co) in the lithium transition metal oxide satisfies the above range, a stable crystal structure may be formed and good output characteristics may be exhibited.

In Chemical Formula 1, c, which represents the ratio of (Mn/Ni+Co+Mn+M1) manganese (Mn) to all metal elements other than lithium in the lithium transition metal oxide, may be 0.20 or more, 0.21 or more, 0.22 or more, 0.23 or more, 0.24 or more, 0.25 or more, 0.26 or more, 0.27 or more, 0.28 or more, 0.29 or more, or 0.30 or more. In addition, c may be less than 0.50, 0.45 or less, 0.40 or less, 0.35 or less, 0.34 or less, 0.33 or less, or 0.32 or less. When the molar fraction of manganese (Mn) in the lithium transition metal oxide satisfies the above range, a stable crystal structure may be formed.

In addition, from the viewpoint of improving the particle strength of a Mid-Ni type lithium transition metal oxide having a polycrystalline structure, it is preferable that the content of manganese (Mn) in the lithium transition metal oxide is greater than the content of cobalt (Co).

Manganese (Mn) serves to impart structural stability to particles of the lithium transition metal oxide and improve the stability of a crystal lattice. Accordingly, when the content of manganese (Mn) is sufficiently secured in the composition of the lithium transition metal oxide, internal stress caused by lattice contraction and expansion occurring during repeated charging/discharging may be relieved, and as a result, the mechanical reliability of particles may be improved.

However, in the case of the so-called High-Ni type lithium transition metal oxide in which a content of nickel (Ni) exceeds 70 mol%, even if the content of manganese (Mn) is greater than the content of cobalt (Co), an effect of improving particle strength is not clearly observed. This is because, in a High-Ni composition, lattice deformation and oxygen release tendencies occurring during charging/discharging act dominantly, and thus the influence of the relative proportions of manganese and cobalt on particle strength is limited.

On the other hand, in a Mid-Ni type in which a content of nickel (Ni) is 50 mol% or more and 70 mol% or less, when the content of manganese (Mn) is greater than the content of cobalt (Co), a crystal lattice stabilization effect is expressed relatively greatly, so the mechanical strength of particles may be improved.

In Chemical Formula 1, M1 represents a dopant capable of being incorporated into the crystal structure of the lithium transition metal oxide.

The lithium transition metal oxide has a layered crystal structure in which a lithium layer including lithium and a transition metal layer including a transition metal are alternately arranged, and at least one dopant may be incorporated into at least one crystal layer of the lithium layer and the transition metal layer, preferably the transition metal layer.

In Chemical Formula 1, d, which represents a molar fraction (M1/Ni+Co+Mn+M1) of the dopant to all elements other than lithium in the lithium transition metal oxide, may be 0.10 or less, 0.09 or less, 0.08 or less, 0.07 or less, 0.06 or less, 0.05 or less, 0.04 or less, 0.03 or less, 0.02 or less, 0.01 or less, 0.009 or less, 0.008 or less, 0.007 or less, 0.006 or less, 0.005 or less, 0.004 or less, 0.003 or less, 0.002 or less, 0.0015 or less, or 0.001 or less. In addition, d may be 0.0005 or more, or 0.001 or more. When the molar fraction of the dopant in the crystal lattice of the lithium transition metal oxide satisfies the above range, the possibility that the lithium transition metal oxide exhibits the crystallographic features intended in the present application increases.

The lithium transition metal oxide may include at least one selected from Na, K, Mg, Ba, B, Ca, Ce, Hf, Ta, Cr, F, Al, V, Ti, Fe, Zr, Zn, Si, Y, Nb, Ga, Sn, W, Mo, P, Sr, Ge, Nd, Gd and Cu, preferably at least one selected from W, Mg, Y, Zr, Ca and V, and more preferably at least one selected from W, Y and Zr. In addition, the lithium transition metal oxide may include at least one dopant selected from W, Y and Zr and at least one dopant selected from Na, K, Mg, Ba, B, Ca, Ce, Hf, Ta, Cr, F, Al, V, Ti, Fe, Zn, Si, Nb, Ga, Sn, Mo, P, Sr, Ge, Nd, Gd and Cu.

When the crystal lattice of the lithium transition metal oxide is doped with a dopant capable of causing local lattice distortion, it may provide a stabilization effect at grain boundaries by partially suppressing the growth of crystallites, and may effectively improve the mechanical strength of secondary particles.

Accordingly, when the crystal lattice of the lithium transition metal oxide is doped with at least one dopant selected from W, Y and Zr, or is co-doped with at least one dopant selected from W, Y and Zr, and at least one dopant selected from Na, K, Mg, Ba, B, Ca, Ce, Ca, Hf, Ta, Cr, F, Al, V, Ti, Fe, Zn, Si, Nb, Ga, Sn, Mo, P, Sr, Ge, Nd, Gd and Cu, the growth of crystallites in the lithium transition metal oxide can be suppressed, thereby improving the mechanical strength of the secondary particles.

The lithium transition metal oxide has a form of secondary particle in which a plurality of primary particles are aggregated.

The primary particle may have a rod shape, an elliptical shape, and/or an irregular shape. In addition, unless specifically intended in a manufacturing process, primary particles having various shapes may be present in the same positive electrode active material. In addition, the primary particle refers to a particle unit that apparently has no grain boundary when observed at a magnification of 5,000 x to 20,000 x using a scanning electron microscope.

The average particle diameter (D₅₀) of the primary particles may be 0.02 µm or more and less than 1 µm, 0.03 µm or more and less than 1 µm, 0.04 µm or more and less than 1 µm, 0.05 µm or more and less than 1 µm, 0.06 µm or more and less than 1 µm, 0.07 µm or more and less than 1 µm, 0.09 µm or more and less than 1 µm, 0.1 µm or more and less than 1 µm, 0.02 µm or more and 0.8 µm or less, 0.03 µm or more and 0.8 µm or less, 0.04 µm or more and 0.8 µm or less, 0.05 µm or more and 0.8 µm or less, 0.06 µm or more and 0.8 µm or less, 0.07 µm or more and 0.8 µm or less, 0.09 µm or more and 0.8 µm or less, or 0.1 µm or more and 0.8 µm or less.

The average particle diameter (D₅₀) of the primary particles may be calculated as an average value ([major-axis length+minor-axis length]/2) of a length in a major-axis direction and a length in a minor-axis direction of the primary particles. The average particle diameter of the primary particles may be calculated by a known method as an average value of particle diameters of all primary particles observed in a surface SEM image and/or a cross-sectional SEM image of the lithium transition metal oxide and/or an average value of measured values for 100 or more randomly selected primary particles.

When the average particle diameter of the primary particles is smaller than 0.02 µm, a specific surface area of the positive electrode active material including the lithium transition metal oxide having a polycrystalline structure becomes excessively large, so degradation of stability due to side reactions with an electrolyte may be caused.

On the other hand, when the average particle diameter of the primary particles is 1 µm or more, intergranular cracks may be reduced, but the primary particles become more susceptible to intragranular cracks, and a problem may occur in which kinetic characteristics are degraded due to a lithium ion diffusion path becoming longer.

The average particle diameter of the secondary particles may be measured using a laser diffraction method. For example, the average particle diameter may be measured by dispersing secondary particles in a dispersion medium, introducing them into a commercially available laser diffraction particle size measuring device (for example, Microtrac MT 3000), irradiating ultrasonic waves of about 28 kHz at an output of 60 W, obtaining a volume cumulative particle size distribution graph, and then obtaining a particle size corresponding to 50% of a volume cumulative amount.

An average particle diameter (D₅₀) of the lithium transition metal oxide may be 3 µm or more and 20 µm or less, preferably 10 µm or more and 18 µm or less. When the average particle diameter (D₅₀) of the secondary particles is less than 3 µm, the compressive density of an electrode may be decreased, and when it exceeds 20 µm, dispersibility within the electrode and crack resistance during charging/discharging may be degraded.

As described above, the lithium transition metal oxide defined in the present invention may provide a stabilization effect at grain boundaries by partially suppressing the growth of crystallites through doping with a dopant capable of causing local lattice distortion in a crystal lattice, and may effectively improve the mechanical strength of secondary particles.

The average crystallite size of the lithium transition metal oxide calculated through Rietveld refinement of the diffraction spectrum obtained through X-ray diffraction analysis of the positive electrode active material using Cu-Kα radiation may be 110 nm or more and less than 148 nm, preferably 110 nm or more and 147 nm or less, more preferably 115 nm or more and 147 nm or less, and still more preferably 117 nm or more and 146 nm or less.

The average crystallite size may be quantitatively analyzed through X-ray diffraction analysis (XRD) of the lithium transition metal oxide using Cu-Kα radiation. Specifically, the average crystallite size may be calculated through Rietveld refinement of an X-ray diffraction spectrum in a 2θ=10° to 120° region obtained through XRD analysis of a positive electrode active material including the lithium transition metal oxide.

When the average crystallite size is less than 110 nm, the crystallites become excessively small, and thus the mechanical cohesive strength of the primary particles constituting the polycrystalline structure may be lowered. Due to this, stress caused by volume changes occurring during charging/discharging is concentrated at grain boundaries, and as a result, cracking or fracture of secondary particles increases, so the stability of the electrode structure may be lowered. In addition, when the crystallite size is excessively small, the specific surface area may unnecessarily increase, thereby promoting side reactions with an electrolyte.

Conversely, when the average crystallite size is 148 nm or more, it may be disadvantageous for improving the mechanical strength of the secondary particles, as it becomes difficult to provide a sufficient stabilization effect at grain boundaries.

Therefore, when the average crystallite size defined in the present invention falls within the above range, the structural stability and electrochemical characteristics of the polycrystalline Mid-Ni type lithium transition metal oxide may be secured in a balanced manner.

The particle fracture strength defined in the present application means a strength index for a secondary particle unit formed by aggregation of a plurality of primary particles, not a primary particle unit. That is, it is not the strength of a single crystal grain, but is a value calculated based on a point at which the entire secondary particle cracks or fractures when receiving a compressive load.

In general, since a positive electrode active material having a single crystal structure does not have a grain boundary therein, the mechanical cohesive strength is strong and the fracture strength of the entire secondary particle appears high. On the other hand, in a polycrystalline structure, since a plurality of primary particles are aggregated to form a secondary particle, cohesion at grain boundaries in particles is relatively weak. In addition, due to the volume changes repeatedly occurring during repeated charging/discharging, a sliding phenomenon may occur at grain boundaries, and due to this, the fracture strength of secondary particles is inevitably lowered.

Nevertheless, the positive electrode active material according to the present invention can improve the fracture strength of secondary particles by partially suppressing the growth of crystallites in a polycrystalline Mid-Ni type lithium transition metal oxide, thereby controlling the crystallite size and promoting stabilization at grain boundaries.

A compressive fracture strength of the positive electrode active material (secondary particles) according to the present invention may be 12.2 kgf/mm² or more and 20.0 kgf/mm² or less, preferably 12.25 kgf/mm² or more and 17.0 kgf/mm² or less, and more preferably 12.26 kgf/mm² or more and 15.53 kgf/mm² or less.

When the compressive fracture strength of the secondary particles is less than 12.2 kgf/mm², the mechanical cohesive strength of the secondary particles is insufficient, so cracking or fracture may easily occur during charging/discharging.

Meanwhile, a polycrystalline structure has an advantage in that stress may be relieved at grain boundaries, so strain may be dispersed throughout particles during charging/discharging. However, when the compressive fracture strength of the secondary particles exceeds 20.0 kgf/mm², the crystal grains become structurally excessively dense, so flexibility according to electrode expansion/contraction decreases, and accordingly, the possibility that intragranular cracks occur may increase.

In addition, the positive electrode active material according to the present invention can effectively suppress intragranular cracks by securing grain boundary crack resistance and stress relaxation behavior.

The effect of suppressing intragranular cracks in the positive electrode active material can be quantitatively evaluated by measuring a change in the average particle diameter of secondary particles before/after 4.5-ton pressing of the positive electrode active material (secondary particles) according to the present invention and calculating a particle breakage ratio according to Equation 1 below. [Equation 1] $Particle breakage ratio = \left({D}_{50}{before}_{pressing}-{D}_{50}{after}_{pressing}\right) / {D}_{50} {before}_{pressing}$

The higher the particle breakage ratio calculated according to Equation 1, the more easily the secondary particles crack or fracture under an external compressive load, which in turn indicates that interparticle bonding strength and internal stress relaxation characteristics are insufficient. Conversely, the lower the particle breakage ratio calculated according to Equation 1, the more stably the structure of the secondary particles can be maintained even when an external load is applied.

In order to improve the mechanical reliability and cycling performance of the positive electrode active material, it is preferable that the particle breakage ratio calculated according to Equation 1 for the positive electrode active material is 0.20 or less.

In general, as the above-described compressive fracture strength of the secondary particles increases, the particle breakage ratio calculated according to Equation 1 may decrease. However, even when the secondary particles exhibit a similar level of compressive fracture strength, if grain boundary crack resistance and stress relaxation behavior are not sufficiently secured, the particle breakage ratio may instead increase.

In addition, when the compressive fracture strength of the secondary particles is excessively high, internal stress is not sufficiently relieved, and vulnerability to intragranular cracks increases, so the particle breakage ratio may increase.

Therefore, when the positive electrode active material has a compressive fracture strength of 12.2 kgf/mm² or more and 20.0 kgf/mm² or less and a particle breakage ratio calculated according to Equation 1 of 0.20 or less, the stability of grain boundaries, stress relaxation characteristics, and intergranular bonding strength are improved overall, and thus excellent mechanical stability can be secured.

### Lithium secondary battery

According to another aspect of the present invention, there is provided a positive electrode including a positive electrode current collector and a positive electrode active material layer formed on the positive electrode current collector. The positive electrode active material layer may include the positive electrode active material according to various embodiments of the present invention. Since the positive electrode active material is the same as described above, for convenience, a detailed explanation will be omitted, and only the components that have not been described will be described below.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may generally have a thickness of 3 µm to 500 µm, and fine irregularities may be formed on the surface of the current collector, thereby increasing the adhesion of a positive electrode active material. For example, the positive electrode current collector may be used in various forms such as a film, a sheet, a foil, a net, a porous body, a foam, a non-woven fabric, etc.

The positive electrode active material layer may be prepared by coating the positive electrode current collector with a positive electrode slurry composition including the positive electrode active material, a conductive material, and optionally a binder.

The positive electrode active material may be included in an amount of 80 wt% to 99 wt%, specifically 85 wt% to 98.5 wt%, with respect to the total weight of the positive electrode active material layer. When the positive electrode active material is included in this content range, excellent capacity characteristics may be exhibited, but the present invention is not necessarily limited thereto.

The conductive material is used to impart conductivity to an electrode, and is not particularly limited as long as it has electron conductivity without causing a chemical change in a battery. Specific examples of the conductive material may include graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be included in an amount of 0.1 wt% to 15 wt% with respect to the total weight of the positive electrode active material layer.

The binder serves to improve the adhesion between particles of the positive electrode active material and the adhesion between the positive electrode active material and a current collector. Specific examples of the binder may include polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, tetrafluoroethylene, polyethylene, polypropylene, an ethylenepropylene-diene polymer (EPDM), a sulfonated EPDM, styrene butadiene rubber (SBR), a fluoroelastomer, or various copolymers thereof, and one or a mixture of two or more thereof may be used. The binder may be included in an amount of 0.1 wt% to 15 wt% with respect to the total weight of the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material, and the binder and then imparting a viscosity for exhibiting excellent thickness uniformity when the slurry is applied to manufacture a positive electrode.

In addition, in another embodiment, the positive electrode may be manufactured by casting the positive electrode slurry composition onto a separate support, and then laminating a film obtained by delamination from the support onto the positive electrode current collector.

Moreover, still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator, which is interposed between the positive electrode and the negative electrode, and an electrolyte. Since the positive electrode is the same as described above, detailed description of the positive electrode will be omitted for convenience, and other components which have not been described above will be described in detail below.

The lithium secondary battery may further optionally include a battery case accommodating an electrode assembly of the positive electrode, the negative electrode and the separator, and a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy. In addition, the negative electrode current collector may generally have a thickness of 3 µm to 500 µm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, a foam, a non-woven fabric, etc.

The negative electrode active material layer may be formed by coating the negative electrode current collector with a negative electrode slurry composition including the negative electrode active material, a conductive material, and optionally a binder.

As the negative electrode active material, a compound capable of the reversible intercalation/deintercalation of lithium may be used. Specific examples of the negative electrode active material may include a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, a Si alloy, a Sn alloy or an Al alloy; a metal oxide capable of doping and dedoping lithium such as SiO_{β} (0<β<2), SnO₂, vanadium oxide, or lithium vanadium oxide; or a composite including the metallic compound and the carbonaceous material such as a Si-C composite or a Sn-C composite, and any one or a mixture of two or more thereof may be used. As the negative electrode active material, a metal lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, plate-like, flaky, spherical or fiber-like natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included in an amount of 80 wt% to 99 wt% with respect to the total weight of the negative electrode active material layer.

The binder is a component that assists in the bonding between a conductive material, an active material, and a current collector, and may typically be added in an amount of 0.1 wt% to 10 wt% with respect to the total weight of the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylenepropylene-diene polymer (EPDM), a sulfonated-EPDM, styrene-butadiene rubber, nitrile-butadiene rubber, a fluoroelastomer, and various copolymers thereof.

The conductive material is a component for further improving the conductivity of the negative electrode active material, and may be added in an amount of 10 wt% or less, preferably, 5 wt% or less, with respect to the total weight of the negative electrode active material layer. The conductive material is not particularly limited as long as it does not cause a chemical change in the battery and has conductivity, and may be, for example, graphite such as natural graphite or artificial graphite; carbon black such as acetylene black, Ketjen black, channel black, furnace black, lamp black, or thermal black; a conductive fiber such as a carbon fiber or a metal fiber; a metal powder such as fluorinated carbon, aluminum, or nickel powder; a conductive whisker consisting of zinc oxide or potassium titanate; a conductive metal oxide such as titanium oxide; or a conductive material such as a polyphenylene derivative.

In an embodiment, the negative electrode active material layer may be prepared by coating the negative electrode current collector with a negative electrode slurry composition prepared by dissolving or dispersing a negative electrode active material, and optionally, a binder and a conductive material in a solvent, and then drying, or may be prepared by casting the negative electrode slurry composition on a separate support and then laminating a film delaminated from the support on the negative electrode current collector.

Meanwhile, in the lithium secondary battery, the separator separates the negative electrode and the positive electrode and provides a passage for lithium ions to move, and is not particularly limited as long as it is commonly used as a separator in lithium secondary batteries. In particular, it is preferable that the separator has low resistance to ion transfer of the electrolyte and excellent electrolyte impregnation ability. Specifically, a porous polymer film, such as a porous polymer film made of a polyolefin-based polymer such as an ethylene homopolymer, a propylene homopolymer, an ethylene/butene copolymer, an ethylene/hexene copolymer, and an ethylene/methacrylate copolymer, or a stacked structure including two or more layers thereof may be used. In addition, a conventional porous non-woven fabric, such as a non-woven fabric made of high melting point glass fiber or polyethylene terephthalate fiber, may be used. In addition, a coated separator including a ceramic component or a polymer material may be used to ensure thermal resistance or mechanical strength, and may be optionally used in a single- or multi-layered structure.

In addition, the electrolyte used herein may be an organic liquid electrolyte, an inorganic liquid electrolyte, a solid polymer electrolyte, a gel-type polymer electrolyte, a solid inorganic electrolyte, or a molten-type inorganic electrolyte, which is able to be used in manufacturing lithium secondary batteries, but the present invention is not limited thereto.

Specifically, the electrolyte may include an organic solvent and a lithium salt.

The organic solvent is not particularly limited as long as it can serve as a medium enabling the movement of ions involved in an electrochemical reaction of a battery. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C₂ to C₂₀ hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferred, and a mixture of a cyclic carbonate (such as ethylene carbonate or propylene carbonate), which has high ionic conductivity and a high dielectric constant that can improve the charging/discharging performance of the battery and a low-viscosity linear carbonate-based compound (such as ethyl methyl carbonate, dimethyl carbonate, or diethyl carbonate) is more preferred. In this case, it is preferable to use a mixture of cyclic carbonate and chain-type carbonate at a volume ratio of about 1:1 to about 1:9, which can result in excellent electrolyte performance.

The lithium salt is not particularly limited as long as it is a compound capable of providing lithium ions used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt is preferably in the range of 0.1 M to 2.0 M. When the concentration of the lithium salt is within this range, the electrolyte has appropriate conductivity and viscosity, exhibiting excellent electrolyte performance, and thus lithium ions may move effectively.

When the electrolyte used herein is a solid electrolyte, for example, a solid inorganic electrolyte such as a sulfide-based solid electrolyte, an oxide-based solid electrolyte, a nitride-based solid electrolyte, or a halide-based solid electrolyte may be used, and preferably, a sulfide-based solid electrolyte may be used.

As a material for the sulfide-based solid electrolyte, a solid electrolyte containing Li, an X element (where X is at least one selected from P, As, Sb, Si, Ge, Sn, B, Al, Ga, and In) and S may be used. Examples of the sulfide-based solid electrolyte material may include Li₂S-P₂S₅, Li₂S-P₂S₅-LiX (where X is a halogen element such as I or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are integers, and Z is Ge, Zn, or Ga), Li₂S-GeS₂, Li₂S-SiS₂-Li₃PO₄, and Li₂S-SiS₂-LiₚMO_{q} (where p and q are integers, and M is P, Si, Ge, B, Al, Ga, or In).

The solid electrolyte, preferably, the sulfide-based solid electrolyte, may be amorphous, crystalline, or in a state in which an amorphous phase and crystalline phase are mixed.

Materials for the oxide-based solid electrolyte include Li₇La₃Zr₂O₁₂, Li₇₋ₓLa₃Zr₁₋ₓNbₓO₁₂, Li₇₋₃ₓLa₃Zr₂AlₓO₁₂, Li₃ₓLa_{2/3-x}TiO₃, Li₁₊ₓAlₓTi₂₋ₓ(PO₄)₃, Li₁₊ₓAlₓGe₂₋ₓ(PO₄)₃, Li₃PO₄, Li₃₊ₓPO₄₋ₓNₓ (LiPON), and Li₂₊₂ₓZn₁₋ₓGeO₄ (LISICON).

The above-described solid electrolyte may be disposed as a separate layer (solid electrolyte layer) between the positive and negative electrodes. In addition, the solid electrolyte may be partially included in the positive electrode active material layer of the positive electrode independent of the solid electrolyte layer, or the solid electrolyte may be partially included in the negative electrode active material layer of the negative electrode independent of the solid electrolyte layer.

To enhance the lifetime characteristics of the battery, inhibit a decrease in battery capacity, and enhance the discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. The additive may be included in an amount of 0.1 wt% to 5 wt% with respect to the total weight of the electrolyte.

Since the lithium secondary battery including the positive electrode active material according to the present invention stably exhibits excellent discharge capacity, output characteristics, and lifetime characteristics, it is useful in portable devices such as mobile phones, laptop computers, and digital cameras and electric vehicles such as hybrid electric vehicles (HEVs).

The outer shape of the lithium secondary battery according to the present invention is not particularly limited, and may be a cylindrical, prismatic, pouch or coin shape using a can. In addition, the lithium secondary battery may be used not only in battery cells used as a power source of small devices, but also preferably used as a unit battery in medium and large-sized battery modules including a plurality of battery cells.

According to yet another aspect of the present invention, there is provided a battery module including the lithium secondary battery as a unit cell and/or a battery pack including the same.

The battery module or the battery pack may be used as a power source for any one or more of medium and large-sized devices such as a power tool; an electric vehicle including an electric vehicle (EV), a hybrid electric vehicle, and a plug-in hybrid electric vehicle (PHEV); and a power storage system.

Hereinafter, the present invention will be described in more detail through examples. However, these examples are only for the purpose of illustrating the present invention and should not be construed as limiting the scope of the present invention.

### Preparation Example 1. Preparation of positive electrode active material

### PAM1

(a) A spherical Ni_{0.60}Co_{0.10}Mn_{0.30}(OH)₂ hydroxide precursor was synthesized by a known co-precipitation method. 25 wt% NaOH (aq) and 30 wt% NH₄OH (aq) were added to a 1.5M composite transition metal sulfate aqueous solution obtained by mixing nickel sulfate, cobalt sulfate, and manganese sulfate at a molar ratio of 60:10:30 in a 90L reactor. The pH in the reactor was maintained at 11.5, the reactor temperature was maintained at 60 °C, and N₂, which is an inert gas, was introduced into the reactor to prevent the prepared precursor from oxidizing. After completing the synthesis reaction under stirring, washing and dehydration were performed using filter press (F/P) equipment to obtain a Ni_{0.60}Co_{0.10}Mn_{0.30}(OH)₂ hydroxide precursor.
(b) The hydroxide precursor obtained in step (a) and Li₂CO₃ were mixed to prepare a mixture. Li₂CO₃ was mixed so that the Li/(Ni+Co+Mn) molar ratio, based on an intermediate product, was 1.03. Subsequently, the mixture was heated from room temperature to 920 °C for 6 hours under an air atmosphere, then heat-treated at 920 °C for 8 hours, and naturally cooled to obtain a positive electrode active material including a lithium transition metal oxide.

### PAM2

(a) A spherical Ni_{0.60}Co_{0.10}Mn_{0.30}(OH)₂ hydroxide precursor was synthesized by a known co-precipitation method. 25 wt% NaOH (aq) and 30 wt% NH₄OH (aq) were added to a 1.5M composite transition metal sulfate aqueous solution obtained by mixing nickel sulfate, cobalt sulfate, and manganese sulfate at a molar ratio of 60:10:30 in a 90L reactor. The pH in the reactor was maintained at 11.5, the reactor temperature was maintained at 60 °C, and N₂, which is an inert gas, was introduced into the reactor so that the prepared precursor did not oxidize. After completing the synthesis reaction under stirring, washing and dehydration were performed using filter press (F/P) equipment to obtain a Ni_{0.60}Co_{0.10}Mn_{0.30}(OH)₂ hydroxide precursor.
(b) The hydroxide precursor obtained in step (a), Li₂CO₃, and WO₃ were mixed to prepare a first mixture. Li₂CO₃ was mixed so that the Li/(Ni+Co+Mn+W) molar ratio, based on an intermediate product, was 0.85. WO₃ was mixed in an amount of 0.2 mol% based on all metal elements excluding lithium in the first mixture. Subsequently, the first mixture was heated from room temperature to 920 °C for 6 hours under an air atmosphere, then heat-treated at 920 °C for 8 hours, and naturally cooled to obtain an intermediate product in the form of a lithium transition metal oxide.
(c) The intermediate product obtained in step (b) and LiOH were mixed to prepare a second mixture. LiOH mixed with the intermediate product was used such that Li/(Ni+Co+Mn) molar ratio based on the lithium transition metal oxide in the final product was 1.03. Subsequently, the second mixture was heated from room temperature to 920 °C for 6 hours under an air atmosphere, then heat-treated at 920 °C for 8 hours, and naturally cooled to obtain a final product including a lithium transition metal oxide.

### PAM3

A positive electrode active material was prepared in the same manner as PAM2, except that 0.1 mol% of Y₂O₃ was used instead of WO₃ in step (b).

### PAM4

A positive electrode active material was prepared in the same manner as PAM2, except that 0.1 mol% of ZrO₂ was used instead of WO₃ in step (b).

### PAM5

A positive electrode active material was prepared in the same manner as PAM2, except that 0.1 mol% of TiO₂ was used instead of WO₃ in step (b).

### PAM6

A positive electrode active material was prepared in the same manner as PAM2, except that 0.2 mol% of Al₂O₃ was used instead of WO₃ in step (b).

### PAM7

A positive electrode active material was prepared in the same manner as PAM1, except that the precursor had a composition of Ni_{0.60}Co_{0.20}Mn_{0.20}(OH)₂.

### PAM8

A positive electrode active material was prepared in the same manner as PAM1, except that the precursor had a composition of Ni_{0.80}Co_{0.10}Mn_{0.10}(OH)₂.

### PAM9

A positive electrode active material was prepared in the same manner as PAM2, except that the heat treatment temperature of step (b) was 1,020 °C.

### Preparation Example 2. Preparation of lithium secondary battery (half-cell)

A positive electrode slurry was prepared by dispersing 94 wt% of each positive electrode active material prepared according to Preparation Example 1, 3 wt% carbon black, and 3 wt% PVDF binder in 30 g of N-methyl-2 pyrrolidone (NMP). The positive electrode slurry was uniformly applied to an aluminum thin film having a thickness of 15 µm and vacuum-dried at 135 °C to prepare a positive electrode for a lithium secondary battery.

A half-cell was prepared using lithium foil as a counter electrode for the positive electrode, a porous polyethylene film (Celgard 2300, thickness: 25 µm) as a separator, and an electrolyte in which LiPF₆ was present at a concentration of 1.15M in a solvent in which ethylene carbonate and ethyl methyl carbonate were mixed at a volume ratio of 3:7.

### Experimental Example 1. Analysis of particle features of positive electrode active material

(1) Measurement of average size of primary particles: The cross-section of the positive electrode active material prepared according to Preparation Example 1 was observed using a scanning electron microscope (SEM, Scanning Electron Microscope). A plurality of primary particles constituting secondary particles were identified from the observed cross-sectional SEM image, and lengths of a major axis and a minor axis were measured for each primary particle. The average value of the measured major-axis length and minor-axis length was defined as the size of each primary particle, and the same measurement was repeated for 100 or more randomly selected primary particles. The final average size of the primary particles was obtained by averaging the sizes of the 100 or more primary particles.
(2) Measurement of average crystallite size of lithium transition metal oxide: X-ray diffraction (XRD) analysis was performed on each positive electrode active material prepared according to Preparation Example 1 to determine the average crystallite size of the lithium transition metal oxide included in the positive electrode active material.
   XRD analysis was performed using a Bruker D8 Advance diffractometer using Cu-Kα radiation (1.540598Å). The average crystallite size was calculated from a straight line obtained by plotting, on a coordinate plane in which a horizontal axis is sinθ and a vertical axis is βcosθ, a diffraction angle θ (rad) and a full width at half maximum β (rad) within a 2θ=10° to 120° region through Rietveld refinement of the diffraction spectrum obtained through X-ray diffraction (XRD) analysis of the positive electrode active material using Cu-Kα radiation.
(3) Measurement of particle fracture strength of positive electrode active material: The compressive fracture strength of the secondary particle unit constituting the positive electrode active material was measured through a single particle compression test.
   Specifically, individual secondary particles were selected under an optical microscope from each positive electrode active material prepared according to Preparation Example 1, and a compressive load was applied using a micro-indenter. The load at the point in time at which the secondary particles cracked or fractured was recorded, and the load value was corrected based on the particle diameter and converted into compressive fracture strength. The measurement was repeatedly performed on 30 or more particles, and the final particle fracture strength was calculated as the average of the individual measured values.
(4) Particle breakage ratio of positive electrode active material after 4.5-ton pressing: The particle breakage ratio was measured by measuring a change in the average particle diameter of secondary particles before/after 4.5-ton pressing for each positive electrode active material prepared according to Preparation Example 1. The average particle diameter of secondary particles before/after pressing was defined as the particle size corresponding to a cumulative volume of 50% in the volume cumulative particle size distribution obtained using a laser diffraction particle size measuring device (Microtrac MT 3000). $Particle breakage ratio = \left({D}_{50}{before}_{pressing}-{D}_{50}{after}_{pressing}\right) / {D}_{50} {before}_{pressing}$

The measurement results are shown in Table 1 below.

**[Table 1]**

| Classification | Average size of primary particles (µm) | Average crystallite size (nm) | Compressive fracture strength (kgf/mm2) | Particle breakage ratio |
|---|---|---|---|---|
| PAM1 | 0.5 | 148 | 12.0 | 0.213 |
| PAM2 | 0.3 | 117 | 12.26 | 0.197 |
| PAM3 | 0.5 | 140 | 13.5 | 0.179 |
| PAM4 | 0.5 | 146 | 15.53 | 0.168 |
| PAM5 | 0.6 | 155 | 11.54 | 0.308 |
| PAM6 | 0.5 | 144 | 12.0 | 0.240 |
| PAM7 | 0.4 | 115 | 12.48 | 0.213 |
| PAM8 | 2.0 | 210 | 24.0 | 0.408 |
| PAM9 | 2.1 | 186 | 20.0 | 0.312 |

Referring to the results of Table 1, it was confirmed that, when the growth of crystallites in the lithium transition metal oxide was suppressed and grain boundaries were stabilized (PAM2 to PAM4), improved compressive fracture strength and a lower particle breakage ratio than PAM 1 were exhibited.

The above results are expected to be attributable to the induction of local lattice distortion in the crystal lattice in PAM2 to PAM4, thereby strengthening the bonding force at grain boundaries and providing a stress relaxation effect.

Meanwhile, it was confirmed that dopants (Ti, Al) used in PAM5 and PAM6 did not cause sufficient lattice distortion in the crystal lattice, and thus the effects of improving compressive fracture strength and reducing the particle breakage ratio were insignificant.

In addition, in the case of PAM7, as the content of manganese (Mn) in the composition of the lithium transition metal oxide was not sufficiently secured, the internal stress-relieving effect was insufficient, and accordingly, the compressive fracture strength of secondary particles was slightly improved, but grain boundary crack resistance and stress relaxation behavior were not sufficiently secured, and thus the particle breakage ratio instead increased.

In the case of PAM8 having a High-Ni composition rather than a Mid-Ni composition, despite using the same dopant as PAM2, crystallite growth was promoted, so primary particles and an average crystallite size increased. Accordingly, although it was confirmed that intergranular cracks decreased, so the compressive fracture strength of secondary particles was improved, vulnerability to intragranular cracks increased, so the particle breakage ratio increased.

Similarly, even in the case of PAM9 in which the growth of primary particles and crystallites was induced by increasing a heat treatment temperature during calcination, it was confirmed that intergranular cracks decreased, so the compressive fracture strength of secondary particles was improved, but the particle breakage ratio increased due to degradation of mechanical reliability caused by the occurrence of intragranular cracks.

### Experimental Example 2. Evaluation of electrochemical characteristics of lithium secondary battery (half-cell)

For the lithium secondary battery (half-cell) prepared in Preparation Example 2, the initial discharge capacity and ratio of discharge capacity after 40 cycles to initial capacity after performing 40 charge/discharge cycles (cycle capacity retention; capacity retention) were measured through a charge/discharge experiment conducted under conditions of 25 °C, a voltage range of 2.7V to 4.45V, and a charge/discharge rate of 0.05/0.05C using an electrochemical analyzer (Toyo, Toscat-3100).

The measurement results are shown in Table 2 below.

**[Table 2]**

| Classification | Initial discharge capacity (mAh/g) | Cycle capacity retention (%) |
|---|---|---|
| PAM1 | 201.5 | 93.0 |
| PAM2 | 201.4 | 95.3 |
| PAM3 | 201.3 | 96.9 |
| PAM4 | 201.6 | 94.9 |
| PAM5 | 201.2 | 89.1 |
| PAM6 | 201.2 | 90.7 |
| PAM7 | 192.8 | 84.0 |
| PAM8 | 191.0 | 60.0 |
| PAM9 | 189.0 | 88.4 |

Referring to the results of Table 2, it was confirmed that when the growth of crystallites in the lithium transition metal oxide was suppressed and grain boundaries were stabilized (PAM2 to PAM4), cycle capacity retention was improved while maintaining an initial discharge capacity at a level similar to that of PAM 1 in a pristine state.

That is, it was confirmed that even when the growth of crystallites in the lithium transition metal oxide was suppressed and grain boundaries were stabilized, no meaningful decrease in initial discharge capacity was observed, and rather, cycling performance could be effectively improved by securing excellent particle strength and structural stability.

On the other hand, when the compressive fracture strength of secondary particles was insufficient or the particle breakage ratio increased due to insufficient stress relaxation in the lattice, collapse of the electrode structure or electrochemical contact instability was induced as charge/discharge cycles were repeated, thereby showing a tendency for the cycling performance to be rapidly degraded.

Although the embodiments of the present invention have been described above, a person having ordinary skill in the art will be able to variously modify and change the present invention by addition, change, deletion, or addition of components and the like within a range not departing from the spirit of the present invention described in the claims, and this will also be included within the scope of rights of the present invention.

## Claims

1. A positive electrode active material comprising a lithium transition metal oxide in which a content of nickel (Ni) among all metal elements excluding lithium is 50 mol% or more and 70 mol% or less,
wherein a content of manganese (Mn) in the lithium transition metal oxide is greater than a content of cobalt (Co),
the lithium transition metal oxide has a form of a secondary particle in which a plurality of primary particles having an average particle diameter of less than 1 µm are aggregated, and
a compressive fracture strength of the positive electrode active material is 12.2 kgf/mm² or more and 20.0 kgf/mm² or less.

2. The positive electrode active material of claim 1, wherein the lithium transition metal oxide has a form of a secondary particle in which a plurality of primary particles having an average particle diameter of 0.02 µm to 0.8 µm are aggregated.

3. The positive electrode active material of claim 1, wherein the lithium transition metal oxide has a form of a secondary particle having an average particle diameter of 3 µm to 20 µm.

4. The positive electrode active material of claim 1, wherein the average crystallite size of the lithium transition metal oxide calculated through Rietveld refinement of the diffraction spectrum obtained through X-ray diffraction analysis of the positive electrode active material using Cu-Kα radiation is 110 nm or more and less than 148 nm.

5. The positive electrode active material of claim 1, wherein the lithium transition metal oxide has a content of cobalt (Co) among all metal elements excluding lithium of less than 20 mol%.

6. The positive electrode active material of claim 1, wherein the lithium transition metal oxide has a content of manganese (Mn) among all metal elements excluding lithium of 20 mol% or more and less than 50 mol%.

7. The positive electrode active material of claim 1, wherein a particle breakage ratio calculated by Equation 1 by measuring a change in the average particle diameter of secondary particles before/after 4.5-ton pressing of the positive electrode active material is 0.20 or less: [Equation 1] $Particle breakage ratio = \left({D}_{50}{before}_{pressing}-{D}_{50}{after}_{pressing}\right) / {D}_{50} {before}_{pressing} .$

8. The positive electrode active material of claim 1, wherein at least one dopant is doped into a crystal lattice of the lithium transition metal oxide.

9. The positive electrode active material of claim 8, wherein the dopant is at least one selected from W, Y and Zr.

10. The positive electrode active material of claim 1, wherein the lithium transition metal oxide has an average composition represented by Chemical Formula 1 below:
[Chemical Formula 1] LiₐNi_{1-(b+c+d)}CO_{b}Mn_{c}M1_{d}O₂
In Chemical Formula 1,
M1 is at least one selected from Na, K, Mg, Ba, B, Ca, Ce, Hf, Ta, Cr, F, Al, V, Ti, Fe, Zr, Zn, Si, Y, Nb, Ga, Sn, W, Mo, P, Sr, Ge, Nd, Gd and Cu, and
0.95≤a≤1.15, 0≤b<0.20, 0.20≤c<0.50, 0<d≤0.10, and 0.50≤1-(b+c+d) ≤0.70.

11. A positive electrode comprising the positive electrode active material according to any one of claims 1 to 10.

12. A lithium secondary battery using the positive electrode according to claim 11.
